# EUROPÄISCHE PATENTSCHRIFT

(11) **EP 1 626 546 B1**
(45) Veröffentlichungstag und Bekanntmachung des Hinweises auf die Patenterteilung: **01.04.2009**
(21) Anmeldenummer: 05013532.6
(22) Anmeldetag: 23.06.2005
(51) Int. Cl.: H04L 25/02

(54) **Datenübertragung über eine Datenübertragungsstrecke mit induktiven Übertragern**
Data transmission for transmission paths which include inductive transformers
Transmission de données pour chemins qui contiennent des transformateurs inductives

(30) Priorität: 12.08.2004 DE 102004039218
(43) Veröffentlichungstag der Anmeldung: 15.02.2006
(73) Patentinhaber: Infineon Technologies AG, 81669 München (DE)
(72) Erfinder: Feldtkeller, Martin, 81543 München (DE)
(74) Vertreter: Bickel, Michael

(56) Entgegenhaltungen:
- EP-A- 1 379 041
- US-A1- 2003 151 442
- US-B1- 6 262 600

## Beschreibung

Die vorliegende Erfindung betrifft ein Verfahren und eine Vorrichtung zur Datenübertragung über eine Übertragungsstrecke mit induktiven Übertragern, insbesondere mit sogenannten Luftspulenübertragern.

Luftspulenübertrager (Coreless Transformer) sind Übertrager mit einer Primärwicklung und einer Sekundärwicklung ohne Wicklungskern. Die Primär- und Sekundärwicklung sind bei solchen Übertragern beispielsweise als planare Wicklungen ausgebildet, die dielektrisch gegeneinander isoliert sind und die beispielsweise auf oder in einem Halbleiterkörper angeordnet sind. Ein derartiger Luftspulenübertrager ist beispielsweise in der DE 102 32 642 A1 beschrieben.

Luftspulenübertrager werden als Potentialbarriere oder galvanische Trennung in Datenübertragungsstrecken, beispielsweise in Datenübertragungsstrecken zur Ansteuerung von Halbleiterschaltern, insbesondere von High-Side-Schaltern in Halbbrückenschaltungen, oder in Datenübertragungsstrecken zur Datenübertragung in industriellen Steuerungen, verwendet.

Die Primärwicklung eines Luftspulenübertragers besitzt eine Zeitkonstante, die maßgeblich vom Querschnitt der Wicklung und von dem Spulendurchmesser der - bei planaren Wicklungen spiralförmig verlaufenden - Wicklung abhängig ist. Diese Zeitkonstante ist der Quotient aus Induktivität und Widerstand der Primärwicklung. Mit dieser Zeitkonstante klingt eine Spannung an der Sekundärwicklung ab, wenn an die Primärwicklung ein sprungförmiges Erregersignal angelegt wird. Für eine Datenübertragung über einen solchen Luftspulenübertrager muss eine primärseitige Ansteuerschaltung ein Ansteuersignal bereitstellen, dessen Flanken Anstiegsdauern und Abfalldauern besitzen, die deutlich kleiner sind als diese Zeitkonstante. Darüber hinaus muss eine sekundärseitig vorhandene Auswerteschaltung in der Lage sein, sekundärseitige Spannungsimpulse zu erkennen, die mit dieser Zeitkonstante abklingen. Die Schnelligkeit der primärseitig und sekundärseitig an der Datenübertragung beteiligten Sende- und Empfangsschaltungen bestimmen somit die Parameter der Wicklungen wesentlich mit. Bei in oder auf einem Chip integrierten Wicklungen bestimmen die Wicklungsparameter die erforderliche Chipfläche wesentlich mit.

Für die Signalübertragung über Datenübertragungsstrecken mit solchen Luftspulenübertragern werden beispielsweise differentielle Übertragungsverfahren genutzt. Bei solchen Verfahren werden zur Übertragung der in einem zweiwertigen Signal enthaltenen Informationen Signalimpulse übertragen, die steigende und fallende Flanken des zu übertragenden Signals kennzeichnen. Zur Unterscheidung steigender und fallender Flanken können die übertragenen Signalimpulse unterschiedliche Amplituden oder Vorzeichen besitzen, oder die Signalimpulse für steigende und fallende Flanken können über verschiedene Kanäle übertragen werden. Die Rückgewinnung des zweiwertigen Signals aus den übertragenen Impulsen erfolgt am empfängerseitigen Ende des Übertragungskanals durch eine Empfangsschaltung mit einer geeigneten Detektions- und Demodulationsanordnung.

Bei den erläuterten Übertragungsstrecken besteht die Gefahr, dass Störsignale, beispielsweise Störsignale aufgrund elektromagnetischer Störungen, in die Übertragungsstrecke eingekoppelt werden, die in Form und Amplitude einem übertragenen Informationsimpuls gleichen und die zu Übertragungsfehlern führen können. Bei einer Ansteuerung eines Halbleiterschalters über eine solche Übertragungsstrecke können nicht erkannte Störimpulse zu einem unerwünschten Schaltzustand des Schaltelements führen.

Um die Robustheit eines differentiellen Übertragungsverfahrens gegenüber Störimpulsen zu reduzieren, ist aus der US 4,027,152 oder der US 6,262,600 jeweils ein differentielles Signalübertragungsverfahren bekannt, bei dem Flanken eines zu übertragenden Signals in Signalimpulse umgesetzt werden und bei dem diese Signalimpulse jeweils periodisch wiederholt werden, um durch Störeinflüsse bedingte Übertragungsfehler erkennen und korrigieren zu können. Nachteilig bei diesem Verfahren ist der vergleichsweise hohe Leistungsverbrauch, der durch das periodische Wiederholen der übertragenen Signalimpulse entsteht.

Differentielle Signalübertragungsverfahren sind außerdem aus der DE 102 44 186 A1 oder DE 102 29 860 A1 bekannt. Bei diesen Verfahren wird die zeitliche Information über steigende Flanken eines zweiwertigen Signals in Form von Impulsen über einen ersten Übertragungskanal, und die Information über fallende Flanken dieses Signals wird in Form von Impulsen über einen zweiten Übertragungskanal übertragen. Bei diesen bekannten Verfahren werden für eine Störsignaldetektion beide Übertragungskanäle überwacht, um bei Detektion eines Störsignals den zuletzt gesendeten Nutzsignalimpuls erneut zu übertragen.

Ein weiteres Übertragungsverfahren über eine Datenübertragungsstrecke mit zwei Luftspulenübertragern ist in der US 6,525,566 B2 beschrieben. Bei diesem Verfahren werden steigende/fallende Flanken eines zweiwertigen Signals jeweils in hochfrequente Signale umgesetzt und über einen der beiden Übertragungskanäle übertragen.

Ein weiteres Übertragungsverfahren mit wenigstens zwei induktiven Überträgern ist in der US 2003/0151442 beschrieben.

Bei einer Ansteuerung der Primärwicklung mittels Rechtecksignalen kann ein Signal, d.h. eine Spannung oder ein Strom, an der Primärwicklung nur so schnell ansteigen, wie eine zugehörige Treiberschaltung den Strom liefern kann. Insbesondere bei einer niedrigen Versorgungsspannung können parasitäre Induktivitäten diese Anstiegszeit erheblich beeinflussen.

Sowohl bei dem zuletzt erläuterten Verfahren, als auch bei den zuvor erläuterten Verfahren, bei denen primärseitig jeweils Rechteckimpulse für die Übertragung bzw. Ansteuerung der Primärwicklung erzeugt werden, werden außerdem elektromagnetische Störimpulse in nicht unerheblichem Umfang erzeugt.

Ziel der vorliegenden Erfindung ist es, ein Verfahren zur Datenübertragung über eine wenigstens zwei induktive Übertrager umfassende Übertragungsstrecke zur Verfügung zu stellen, das robust gegenüber Störungen und parasitären Induktivitäten ist, das eine geringe elektromagnetische Störstrahlung hervorruft und das einfach realisierbar ist, und eine Vorrichtung zur Durchführung eines solchen Verfahrens zur Verfügung zu stellen.

Dieses Ziel wird durch ein Verfahren mit den Merkmalen des Anspruchs 1 und durch eine Vorrichtung mit den Merkmalen des Anspruchs 9 gelöst. Vorteilhafte Ausgestaltungen der Erfindung sind Gegenstand der Unteransprüche.

Bei dem erfindungsgemäßen Verfahren zur Datenübertragung über eine Übertragungsstrecke mit wenigstens zwei induktiven Übertragern die jeweils eine Primärwicklung und eine Sekundärwicklung aufweisen, ist vorgesehen, die Primärwicklungen zur Übertragung eines Informationsereignisses mittels Ansteuersignalen derart anzusteuern, dass die Summe der Ansteuersignale einer Hüllkurve mit einer vorgegebenen Hüllkurvendauer folgt. Die Hüllkurve ist dabei so gewählt ist, dass sie im zeitlichen Verlauf innerhalb einer Anstiegsdauer von einem Anfangswert auf einem Maximalwert ansteigt und innerhalb einer Abfalldauer wieder auf den Anfangswert absinkt und dass deren Anstiegsdauer und Abfalldauer länger als die Zeitkonstanten der Primärwicklungen sind. Der zeitliche Verlauf der Ansteuersignale ist von dem zu übertragenden Informationsereignis abhängig und so gewählt ist, dass im zeitlichen Verlauf wenigstens eine steile Flanke vorhanden ist, deren Anstiegs- oder Abfallzeit wesentlich kürzer ist als die Zeitkonstanten der Primärwicklungen.

Unter Ansteuersignalen für die Primärwicklungen sind in der vorliegenden Anmeldung Spannungen über den Primärwicklungen, d.h. an die Primärwicklungen angelegte Spannungen, oder Ströme durch die Primärwicklungen zu verstehen.

Um eine Übertragung über einen einzelnen Übertrager zu ermöglichen, muss das zugehörige Ansteuersignal - wie eingangs erwähnt - Flanken aufweisen, deren Steilheit größer ist, als der Kehrwert der Zeitkonstante der Primärwicklung des jeweiligen Übertragers. Solche Flanken sind die steilen Flanken der Ansteuersignale, von denen während der Hüllkurvendauer wenigstens eine vorhanden ist. "Nach außen sichtbar" sind bei einer Übertragungsvorrichtung die Summe der zur Erzeugung der einzelnen Ansteuersignale aufgenommenen Ströme und die Summe der aus den einzelnen Ansteuervorgängen resultierenden Magnetfeldern. Diese Summe der Ströme und der Magnetfelder folgt bei dem erfindungsgemäßen Verfahren der Hüllkurve, die im Hinblick auf elektromagnetische Abstrahlung und Stromaufnahme bzw. Dauer der Übertragung eines Informationsereignisses optimierbar ist. Vorzugsweise besitzt die Hüllkurve den Verlauf einer Gauß-Kurve oder den Verlauf eines Abschnitts einer Sinus-Quadrat-Kurve.

Die erfindungsgemäße Vorrichtung zur Datenübertragung weist folgende Merkmale auf:
- eine Übertragungsstrecke mit wenigstens zwei induktiven Übertragern, die jeweils eine Primärwicklung und eine Sekundärwicklung aufweisen,
- eine an die Primärwicklungen angeschlossene Sendevorrichtung mit einem Eingang zur Zuführung eines Sendesignals, die Ansteuersignale für die Primärwicklungen derart bereitstellt, dass die Summe der Ansteuersignale einer Hüllkurve mit einer Hüllkurvendauer folgt,
- wobei die Hüllkurve so gewählt ist, dass sie im zeitlichen Verlauf innerhalb einer Anstiegsdauer von einem Anfangswert auf einem Maximalwert ansteigt und innerhalb einer Abfalldauer wieder auf den Anfangswert absinkt und dass deren Anstiegsdauer und Abfalldauer länger als die Zeitkonstanten der Primärwicklungen sind,
- wobei der zeitliche Verlauf der Ansteuersignale von zu übertragenden Information abhängig und so gewählt ist, dass wenigstens eine steile Flanke vorhanden ist, deren Anstiegs-oder Abfalldauer kürzer als die Zeitkonstanten der Primärwicklungen ist.

Die vorliegende Erfindung wird nachfolgend anhand von Figuren näher erläutert.
- Figur 1: zeigt eine Datenübertragungsstrecke mit einer Sendevorrichtung und einer Empfangsvorrichtung sowie einer zwischen Sende- und Empfangsvorrichtung angeordneten Übertragungsstrecke mit zwei Übertragern.
- Figur 2: zeigt für ein erstes Ausführungsbeispiel des erfindungsgemäßen Verfahrens die zeitlichen Verläufe der Spannung über den Primärwicklungen (Figuren 2c und 2d) und der Ströme durch die Primärwicklungen (Figur 2e) in Abhängigkeit von einem Eingangssignal (Figur 2a).
- Figur 3: zeigt ein Ausführungsbeispiel einer Sendevorrichtung zur Durchführung eines Verfahrens gemäß Figur 2.
- Figur 4: zeigt beispielhaft die zeitlichen Verläufe ausgewählter in der Sendevorrichtung gemäß Figur 3 vorkommender Signale.
- Figur 5: veranschaulicht ein weiteres Ausführungsbeispiel eines erfindungsgemäßen Verfahrens anhand zeitlicher Verläufe eines Eingangssignals (Figur 5a) und der Spannungen über Primärwicklungen der Übertrager (Figur 5c und 5d) .
- Figur 6: zeigt beispielhaft zeitliche Verläufe senderseitig und empfängerseitig auftretender Signale bei dem Verfahren nach dem zweiten Ausführungsbeispiel.
- Figur 7: zeigt ein Realisierungsbeispiel für eine Empfängervorrichtung.
- Figur 8: zeigt beispielhaft zeitliche Verläufe ausgewählter, in der Empfängervorrichtung gemäß Figur 7 vorkommender Signale.
- Figur 9: veranschaulicht ein weiteres Ausführungsbeispiel eines erfindungsgemäßen Verfahrens.

In den Figuren bezeichnen, sofern nicht anders angegeben, gleiche Bezugszeichen und Signale mit gleicher Bedeutung.

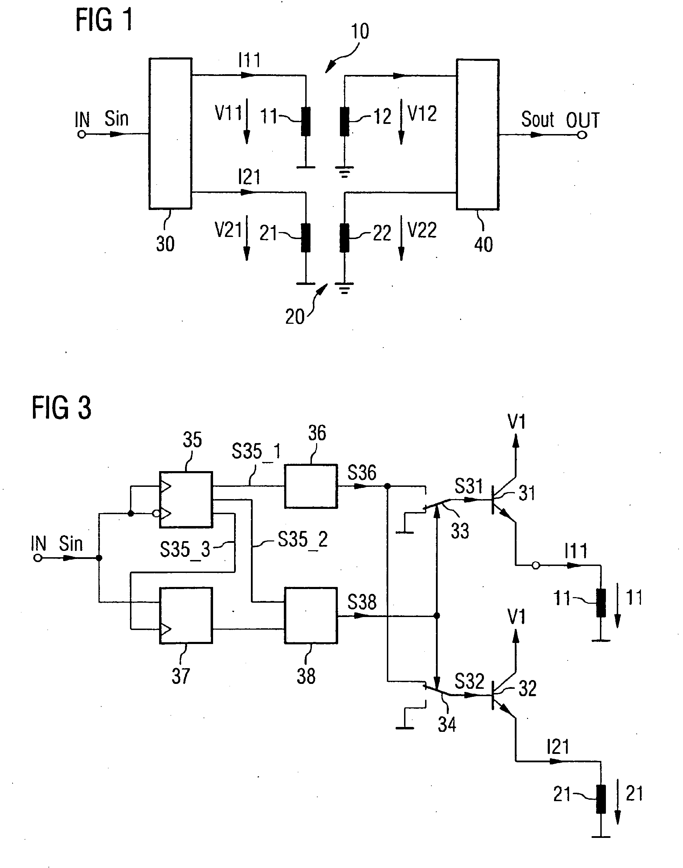

Figur 1 zeigt im Überblick eine Datenübertragungsvorrichtung mit einer Sendevorrichtung 30, der an einem Eingang IN ein Sendesignal Sin zugeführt ist, einer Empfängervorrichtung 40 die an einem Ausgang OUT ein Empfangssignal Sout bereitstellt, und mit einer zwischen Sendevorrichtung 30 und Empfängervorrichtung 40 angeordneten Übertragungsstrecke. Die Übertragungsstrecke umfasst zwei induktive Übertrager 10, 20, die jeweils eine Primärwicklung 11, 21 und eine Sekundärwicklung 12, 22 aufweisen. Die Primärwicklungen 11, 21 sind dabei an die Sendevorrichtung 30 angeschlossen, und die induktiv mit den Primärwicklungen 11, 21 gekoppelten Sekundärwicklungen 12, 22 sind an die Empfängerschaltung 40 angeschlossen. Die Primärwicklungen 11, 21 sind an einem der Sendevorrichtung 30 abgewandten Anschluss an ein erstes bzw. primärseitiges Bezugspotential angeschlossen, und die Sekundärwicklungen 12, 22 sind an einem der Empfängerschaltung 40 abgewandten Anschluss an ein zweites bzw. sekundärseitiges Bezugspotential angeschlossen, wobei sich das erste und zweite Bezugspotential unterscheiden können.

Für die nachfolgende Erläuterung sind mit I11, I21 Ströme durch die Primärwicklungen und mit V11, V21 Spannungen über den Primärwicklungen 11, 21 bezeichnet, die durch die Sendevorrichtung 30 abhängig von dem Eingangssignal Sin erzeugt werden. Mit V12, V22 sind Spannungen über den Sekundärwicklungen 12, 22 bezeichnet, die aufgrund der induktiven Kopplung aus den über den Primärwicklungen 11, 21 anliegenden Spannungen V11, V21 bzw. den die Primärwicklungen durchfließenden Strömen I11, I21 resultieren.

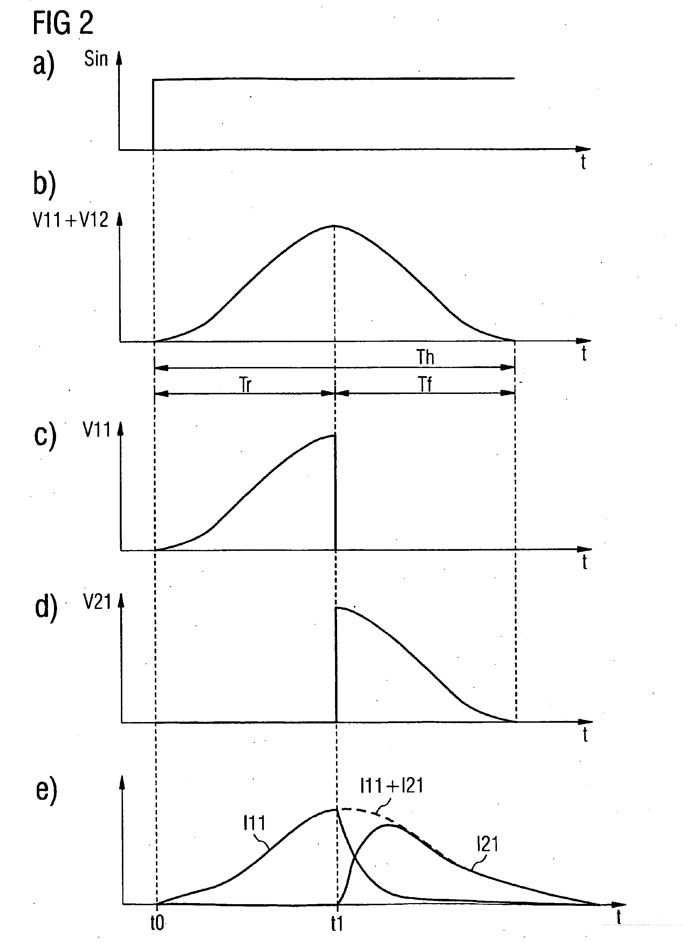

Ein erstes Ausführungsbeispiel eines erfindungsgemäßen Datenübertragungsverfahren für die Datenübertragung über eine Datenübertragungsvorrichtung gemäß Figur 1 wird nachfolgend anhand von Figur 2 für die Übertragung eines Informationsereignisses, das zwei unterschiedliche Zustände annehmen kann, erläutert.

Das zu übertragende Informationsereignis stellt in dem Beispiel gemäß Figur 2 eine steigende Flanke des Sendesignals Sin dar, die zu einem Zeitpunkt t0 auftritt. Nach Auftreten dieses Informationsereignisses erfolgt eine Ansteuerung der Primärwicklungen (11, 21 in Figur 1) derart, dass die Summe der Primärspannungen V11, V21 einer Hüllkurve mit einer vorgegebenen Hüllkurvendauer Th folgt, wobei sich die zeitlichen Verläufe der Primärspannungen V11, V21 abhängig vom zu übertragenden Zustand bzw. Wert des Informationsereignisses unterscheiden. Die Hüllkurvendauer legt die zur Übertragung eines vorgegebenen Informationsereignisses erforderliche Zeitdauer und damit die mittels des Verfahrens maximal mögliche Übertragungsfrequenz fest. Die Hüllkurvendauer liegt beispielsweise im Bereich zwischen 10ns und 100ns, woraus Übertragungsraten zwischen 100MHz und 10MHz resultieren.

In Figur 2c ist der zeitliche Verlauf der ersten Primärspannung V11 an der ersten Primärwicklung 11 und in Figur 2d ist der zeitliche Verlauf der zweiten Primärspannung V21 an der zweiten Primärwicklung 21 dargestellt. Figur 2b zeigt den zeitlichen Verlauf der Hüllkurve, die der Summe aus den beiden Primärspannungen V11, V21 entspricht. Diese Hüllkurve ist so gewählt, dass sie im zeitlichen Verlauf innerhalb einer Anstiegsdauer Tr von einem Anfangswert, vorzugsweise Null, auf einen Maximalwert ansteigt, und nach Erreichen des Maximums innerhalb einer Abfalldauer Tf von dem Maximalwert wieder auf den Ausgangswert abfällt, wobei die Hüllkurve in dem Beispiel unmittelbar nach Erreichen des Maximums wieder absinkt. Die Hüllkurve ist außerdem so gewählt, dass die Steilheit während der Anstiegsdauer Tr und während der Abfalldauer Tf betragsmäßig kleiner ist als der Quotient aus der Differenz zwischen Maximalwert und Minimalwert und den Zeitkonstanten der Primärwicklungen 11, 21 bzw. dass die Anstiegsdauer Tr und Abfalldauer größer sind als diese Zeitkonstanten. Diese Zeitkonstanten entsprechen bekanntlich dem Quotienten aus Induktivitätswert und Widerstandswert der Primärwicklungen 11, 21.

Die zeitlichen Verläufe der ersten und zweiten Primärspannung V11, V21, deren Summe der Hüllkurve entspricht, sind darüber hinaus so gewählt, dass wenigstens eine "steile" Flanke vorhanden ist, deren Anstiegs- bzw. Abfalldauer kürzer ist als die Zeitkonstanten der Primärwicklungen 11, 21.

Die Anforderungen, wonach die Summe der Primärspannungen V11, V21 der Hüllkurve entspricht, und wonach eine solche steile Flanke vorhanden ist, wird in dem Beispiel gemäß Figur 2 dadurch erfüllt, dass die erste Primärspannung V11 zwischen dem Zeitpunkt t0 und einem Zeitpunkt t1, zu dem das Maximum der Hüllkurve vorliegt, der Hüllkurve folgt, während die zweite Primärspannung V21 Null ist. Zum Zeitpunkt t1 geht die erste Primärspannung V11 auf Null, während die zweite Primärspannung V21 auf den Maximalwert der Hüllkurve ansteigt und im weiteren zeitlichen Verlauf der Hüllkurve folgt.

Figur 2e zeigt den zeitlichen Verlauf der Primärströme I11, I21 durch die Primärwicklungen 11, 21. Gestrichelt dargestellt ist in Figur 2e auch die Summe der Primärströme I11, I21, wobei dieses Summensignal dem in Figur 2b dargestellten Hüllkurvensignal der Primärspannungen V11, V21 aufgrund der Zeitkonstanten der Primärwicklungen zeitverzögert folgt. Der erste Primärstrom I11 klingt nach der steilen fallenden Flanke der ersten Primärspannung V11 nach dem Zeitpunkt t1 exponentiell ab, während sich der zweite Primärstrom I21 nach der steilen steigenden Flanke der zweiten Primärspannung V21 nach dem Zeitpunkt t1 exponentiell der Hüllkurve annähert.

Eine Signalübertragung von der Primärseite auf die Sekundärseite der Übertrager 10, 20 erfolgt bei dem Verfahren während der Hüllkurvendauer jeweils zu dem Zeitpunkt, zu dem die Primärspannung V11, V12 eine steile Flanke aufweist, da die Steilheit dieser Flanken im Hinblick auf die Zeitkonstante der Primärwicklungen ausreichend groß ist, um sekundärseitig eine nennenswerte Spannung zu induzieren. Bezugnehmend auf das Beispiel in Figur 2 ist das der Zeitpunkt t1, zu dem eine fallende steile Flanke der ersten Primärspannung V11 und eine steigende steile Flanke der zweiten Primärspannung V21 vorliegt. Die Steilheit des Anstiegs der ersten Primärspannung V11 vor diesem ersten Zeitpunkt t1 bzw. die Steilheit des Abfallens der zweiten Primärspannung V21 nach diesem Zeitpunkt t1 ist im Hinblick auf die Zeitkonstanten der Primärwicklungen zu gering, um sekundärseitig eine nennenswerte Spannung zu induzieren.

Der Vorteil des erfindungsgemäßen Verfahrens besteht darin, dass die Summe der Ströme durch die Primärwicklungen, die im Wesentlichen die Stromaufnahme der Sendevorrichtung 30 bestimmen, der Hüllkurve folgen. Gleiches gilt für die Summe der aus der Ansteuerung der beiden Primärspulen resultierenden Magnetfelder. Für die Außenwirkung ist das aus der Gesamtstromaufnahme der Sendevorrichtung resultierende Magnetfeld maßgeblich, das ebenfalls der Hüllkurve folgt, da der Gesamtstrom, d.h. die Summe der Primärströme, der Hüllkurve folgt. Eine bei dem erfindungsgemäßen Verfahren auftretende elektromagnetische Störstrahlung ist somit ausschließlich vom zeitlichen Verlauf der Hüllkurve abhängig, deren steigende und fallende Flanken völlig unabhängig von der Zeitkonstante der Primärwicklungen gewählt werden können und die somit im Hinblick auf eine Reduzierung elektromagnetischer Störstrahlung optimiert werden kann. Die Hüllkurve ist vorzugsweise so gewählt, dass sie innerhalb der Hüllkurvendauer Th näherungsweise einer Gaußkurve folgt. Selbstverständlich sind beliebige weitere im Hinblick auf eine elektromagnetische Störstrahlung optimierte Kurvenverläufe für die Hüllkurve anwendbar. Als weiteres Beispiel hierfür sei ein zeitlicher Verlauf der Hüllkurve gemäß einem in der Datenübertragung hinlänglich bekannten Raised Cosine-Impuls denkbar.

Die zeitlichen Verläufe der Ansteuersignale V11, V21 sind vorzugsweise so gewählt sind, dass die steile Flanke unmittelbar oder kurze Zeit nach einem Zeitpunkt vorliegt t1; t3, zu dem die Hüllkurve ihren Maximalwert erreicht. "Kurze Zeit" bedeutet beispielsweise innerhalb einer Dauer, die dem 0...2-fachen der Zeitkonstanten der Primärwicklungen entspricht.

Darüber hinaus kann die Hüllkurve so an die zeitlichen Verläufe der Ansteuersignale angepasst sein, dass sie unmittelbar nach t1; t3 der steilen Flanke der zeitlichen Verläufe der Ansteuersignale V11, V21 wieder absinkt.

Die zeitlichen Verläufe in Figur 2 veranschaulichen das erfindungsgemäße Verfahren zur Übertragung eines ersten von zwei möglichen Zuständen des Informationsereignisses, nämlich im vorliegenden Fall das Vorliegen einer steigenden Flanke eines zweiwertigen Sendesignals Sin. Zur Übertragung einer fallenden Flanke des Eingangssignals Sin sind nur die zeitlichen Verläufe der ersten und zweiten Primärspannung zu vertauschen.

Bei einem Übertragungsverfahren unter Verwendung zweier Übertragungskanäle sind die Primärspannungen V11, V21 im zeitlichen Verlauf dahingehend komplementär zueinander, dass die Summe der Primärspannungen V11, V21 der Hüllkurve folgt. Die Forderung nach einer steilen Flanke, die zur Erzeugung eines ausreichenden Sekundärspannungsimpulses erforderlich ist, im zeitlichen Verlauf einer der Primärspannungen kann hierbei nur dadurch erfüllt werden, dass die beiden Primärspannungen zu einem Zeitpunkt in entgegengesetzte Richtungen verlaufende steile Flanken aufweisen. Es sei darauf hingewiesen, dass die Übertragungsstrecke auch mehr als zwei Übertrager aufweisen kann, wobei die Summe der Primärspannungen auch in diesem Fall der Hüllkurve folgt. In diesem Fall kann die Forderung nach einer steilen Flanke einer der Primärspannungen auch erreicht werden, ohne dass alle anderen Primärspannungen zum Zeitpunkt einer steilen Flanke einer der Primärspannungen ebenfalls eine steile Flanke aufweisen müssen.

Figur 3 zeigt ein Realisierungsbeispiel für eine Sendevorrichtung 30 zur Durchführung einer anhand von Figur 2 erläuterten Ansteuerung der Primärwicklungen 11, 21 für das erfindungsgemäße Verfahren.

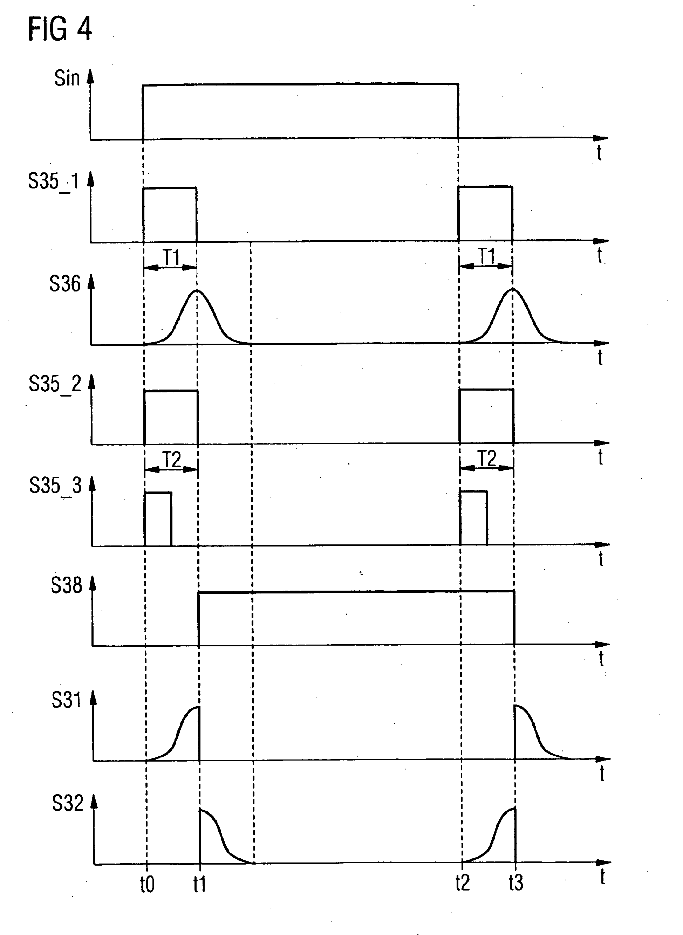

Die Sendevorrichtung umfasst eine Signalgeneratoranordnung, die nach Maßgabe des Sendesignals Sin ein Hüllkurvensignal S36 erzeugt. Diese Signalgeneratoranordnung weist in dem Beispiel einen Impulsgenerator 35 auf, der dazu ausgebildet ist, ein erstes Rechtecksignal S35_1 zu erzeugen, das sowohl nach einer steigenden Flanke als auch nach einer fallenden Flanke des Sendesignals Sin einen Rechteckimpuls einer vorgegebenen Dauer aufweist. Dieser Rechteckimpuls S35_1 ist einem Impulsformer 36 zugeführt, der das Hüllkurvensignal mit dem gewünschten zeitlichen Verlauf erzeugt. Die Funktionsweise der Signalgeneratoranordnung und des Impulsformers wird anhand der Figur 4a bis 4c deutlich, in denen beispielhaft der zeitliche Verlauf des Sendesignals Sin, der daraus resultierende zeitliche Verlauf des ersten Signals S35_1 und der aus dem Rechteckimpulse aufweisenden ersten Signal S35_1 resultierende zeitliche Verlauf des Hüllkurvensignals S36 dargestellt ist. Das Sendesignal Sin weist bezugnehmend auf Figur 4 zu einem Zeitpunkt t0 eine steigende Flanke und zu einem späteren Zeitpunkt t2 eine fallende Flanke auf. Entsprechend erzeugt der Impulsgenerator Rechteckimpulse des ersten Rechtecksignals S35_1 zum ersten Zeitpunkt t0 und zum weiteren Zeitpunkt t2. Das Hüllkurvensignal S36 weist Hüllkurvenimpulse mit dem gewünschten Hüllkurvenverlauf ebenfalls nach den Zeitpunkten t0 und t2 auf. Der Impulsformer 36, der die Hüllkurvenimpulse aus den Rechteckimpulsen S35_1 erzeugt, ist beispielsweise als Tiefpassfilter höherer Ordnung ausgebildet.

Das Hüllkurvensignal S36 ist über eine Verteilerschaltung Treiberschaltungen 31, 32 für die Primärwicklungen 11, 21 zugeführt. Die Treiberschaltungen umfassen in dem Beispiel jeweils einen Transistor 31, 32, der als Emitterfolger mit der jeweiligen Primärwicklung 11, 21 zwischen ein Versorgungspotential V1 und das primärseitige Bezugspotential verschaltet ist. Die Verteilerschaltung weist den Treiberschaltungen 31, 32 vorgeschaltete Umschalter 33, 34 auf, die durch eine Ansteuerschaltung 38 angesteuert sind. Die Ansteuerung dieser Umschalter 33, 34 erfolgt in dem Beispiel derart, dass jeweils einer der Treiberschaltung 31, 32 das Hüllkurvensignal S36 als Eingangssignal zugeführt ist, während der Eingang der anderen Treiberschaltung auf Bezugspotential liegt, was einem Eingangssignal Null entspricht. Die Eingänge der Treiberschaltungen sind in dem Beispiel durch die Basisanschlüsse der Treibertransistoren 31, 32 gebildet.

Die Ansteuerung der Schalter 33, 34 über die Ansteuerschaltung 38 erfolgt abhängig von dem Eingangssignal Sin und abhängig von einem Zeitsteuersignal S35_2, wobei dieses Zeitsteuersignal S35_2 den Umschaltzeitpunkt vorgibt, zu dem das Hüllkurvensignal S36 von der einen Treiberschaltung auf die andere Treiberschaltung umgeschaltet wird. Dieses Zeitsteuersignal S35_2 ist bezugnehmend auf Figur 4 beispielsweise ebenfalls ein von dem Impulsgenerator 35 erzeugtes Rechtecksignal, das mit der steigenden oder fallenden Flanke des Eingangssignals Sin beginnt und dessen zeitliche Dauer T2 beispielsweise der Hälfte der Dauer Th eines Hüllkurvenimpulses des Hüllkurvensignals S36 entspricht. Diese Zeitdauer T2 des Zeitsteuersignals S35_2 kann der Zeitdauer der Impulse des ersten Signals T1 entsprechen, kann abhängig von der Ausgestaltung des Impulsformers und dem verlauf der Hüllkurvenimpulse auch unterschiedlich dazu gewählt werden.

Die Ansteuerschaltung 38 ist in dem dargestellten Beispiel ein XOR-Gatter, dessen einem Eingang das Zeitsteuersignal S35_2 zugeführt ist und dessen anderem Eingang ein von dem Eingangssignal Sin abhängiges Signal zugeführt ist. Dieses Signal könnte das Eingangssignal Sin sein. In dem Beispiel ist allerdings ein Latch 37 zwischen den Eingang IN und die Ansteuerschaltung 38 geschaltet, das abhängig von einem Taktimpulses S35_3 das Eingangssignal Sin zwischenspeichert. Kurzzeitige Schwankungen des Eingangssignals Sin bleiben auf diese Weise ohne Wirkung auf die Ansteuerung. Der Taktimpuls S35_3 wird von dem Signalgenerator bei einer steigenden oder fallenden Flanke des Eingangssignals Sin erzeugt.

Bezugnehmend auf die zeitlichen Verläufe in Figur 4 liegt nach einer steigenden Flanke des Eingangssignals Sin an beiden Eingängen der Ansteuerschaltung 38 für die Zeitdauer eines Impulses des Zeitsteuersignals S35_2 ein Low-Pegel an, der zu einem Low-Pegel des Ansteuersignals S38 führt. Der erste Umschalter 33 ist durch diesen Low-Pegel so angesteuert, dass der ersten Treiberschaltung 31 das Hüllkurvensignal S36 zugeführt ist, während der zweite Schalter 34 so angesteuert ist, dass er auf Bezugspotential liegt. Nach der fallenden Flanke des Impulses des Zeitsteuersignals S35_2 liegt am Ausgang der Ansteuerschaltung 38 ein High-Pegel an, wodurch die beiden Schalter 33, 34 umgeschaltet werden. Der erste Schalter 33 liegt dann auf Bezugspotential, während der zweite Schalter 34 das Hüllkurvensignal S36 an die zweite Treiberschaltung 32 weiterleitet.

Nach einer fallenden Flanke des Eingangssignals Sin erfolgt die Ansteuerung der beiden Schalter 33, 34 in umgekehrter Reihenfolge. Nach der fallenden Flanke liegt am Ausgang der Ansteuerschaltung S38 bis zur fallenden Flanke des Impulses des Zeitsteuersignals S35_2 ein High-Pegel an, wodurch zunächst der erste Schalter 33 an Bezugspotential liegt, während der zweiten Treiberschaltung 32 über den zweiten Schalter 34 das Hüllkurvensignal S36 zugeführt ist. Nach der fallenden Flanke des Zeitsteuersignalimpulses werden die beiden Schalter 33, 34 umgeschaltet. Der zweite Schalter 34 liegt dann auf Bezugspotential, d. h. das Eingangssignal der zweiten Treiberstufe 32 ist Null, während der ersten Treiberstufe 31 das Hüllkurvensignal S36 als Eingangssignal zugeführt ist.

Bei dem zuvor erläuterten Ausführungsbeispiel des erfindungsgemäßen Verfahrens erfolgt die Ansteuerung der Primärwicklungen 11, 21 derart, dass während der Hüllkurvendauer Th eine der Primärspannungen V11, V21 jeweils Null ist.

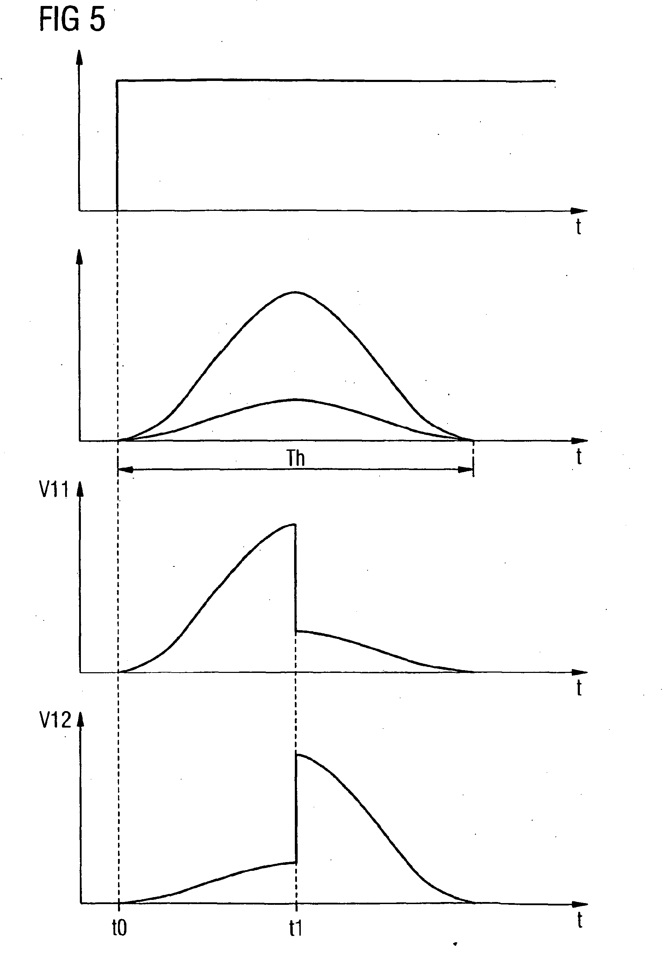

Bezug nehmend auf Figur 5 kann die Robustheit des Übertragungssystems gegenüber Störsignalen dadurch gesteigert werden, dass die Primärspannung während der Hüllkurvendauer Th nicht auf Null absinkt. Hierzu wird während der Hüllkurvendauer Th beispielsweise an beiden Primärwicklungen 11, 21 permanent eine Spannung angelegt, deren zeitlicher Verlauf beispielsweise dem zeitlichen Verlauf des Hüllkurvensignals entspricht, das jedoch eine kleinere Amplitude als das Hüllkurvensignal besitzt. Die Amplitude dieser während der Hüllkurvendauer permanent anliegenden Anteils der Primärspannungen kann beispielsweise zwischen 10% und 40% der Amplitude der Hüllkurve betragen.

Die Erzeugung solcher Primärspannnungen kann beispielsweise dadurch erzeugt werden, dass die Eingänge der Treiberschaltungen permanent mit einem ersten Signal beaufschlagt werden, dessen zeitlicher Verlauf dem Verlauf des gewünschten permanenten Spannungsanteils entspricht und dem der veränderliche Signalanteil überlagert wird.

Des weiteren besteht bezugnehmend auf die Schaltung in Figur 3 auch die Möglichkeit, die auf Bezugspotential liegenden Anschlüsse der Umschalter in nicht dargestellter Weise auf ein von Bezugspotential verschiedenes Potential zu legen, dessen zeitlicher Verlauf dem gewünschten zeitlichen der Spannung der Primärwicklung, die nicht durch das Hüllkurvensignal angesteuert ist, entspricht. Ein derartiger Signalverlauf kann beispielsweise mit Hilfe eines Spannungsteilers aus dem Hüllkurvensignal erzeugt werden.

Figur 5b zeigt den zeitlichen Verlauf der Hüllkurve, während in den Figuren 5c und 5d die zeitlichen Verläufe der ersten Primärspannung V11 über der ersten Primärwicklung und der zweiten Primärspannung V21 über der zweiten Primärwicklung dargestellt sind, die jeweils einen permanent anliegenden Primärspannungsanteil besitzen. Moduliert, d.h. abhängig von der zu übertragenden Information, auf die beiden Primärspannungen abgebildet wird bei diesem Verfahren nur ein Teil der Hüllkurve, der beispielsweise zwischen 60% und 90% der Amplitude der Hüllkurve beträgt.

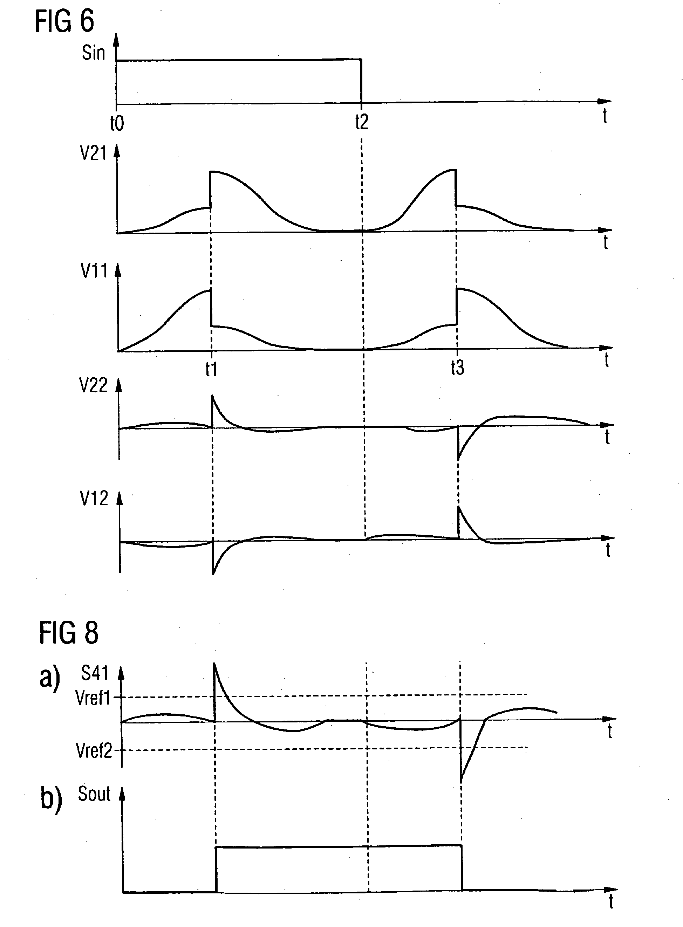

Figur 6 zeigt beispielhaft die zeitlichen Verläufe des Sendesignals Sin, der ersten und zweiten Primärspannung V11, V21 sowie der aus den ersten und zweiten Primärspannungen resultierenden ersten und zweiten Sekundärspannungen V12, V22 für das Verfahren gemäß dem zweiten Ausführungsbeispiel. Es sei darauf hingewiesen, dass sich die sekundärseitigen Spannungsverläufe bei Verwendung der in Figur 2 dargestellten Impulsformen für das erste Ausführungsbeispiel nicht wesentlich von den sekundärseitigen Spannungsverläufen bei Verwendung der in Figur 5 dargestellten Impulsformen des zweiten Ausführungsbeispiels unterscheiden, so dass im Folgenden zur Erläuterung der sekundärseitigen Spannungsverläufe nur von den primärseitigen Impulsen gemäß Figur 5 ausgegangen wird.

Wie anhand der zeitlichen Verläufe des Eingangssignals Sin, sowie der Primär- und Sekundärspannungen ersichtlich ist, erfolgt die Übertragung eines Informationsereignisses, im vorliegenden Fall das Vorliegen steigender und fallender Flanken des Sendesignals Sin zu den Zeitpunkten t0 und t2 im Gegentakt. Zeitverzögert nach den steigenden und fallenden Flanken des Eingangssignals Sin sind sekundärseitig Spannungsimpulse detektierbar, die eine entgegengesetzte Polarität besitzen. Die Zeitverzögerung resultiert aus dem zeitlichen Verlauf der aus der Hüllkurve abgeleiteten Primärspannungen und entspricht der Zeitverzögerung zwischen der steigenden bzw. fallenden Flanke des Sendesignals Sin und den steilen Flanken der Primärspannung V11, V21. Nach einer steigenden Flanke des Sendesignals Sin zu einem Zeitpunkt t0 weist die erste Primärspannung V11 zu einem späteren Zeitpunkt t1 eine steile fallende Flanke und die zweite Primärspannung V21 eine steile steigende Flanke auf. Hieraus resultiert ein negativer Spannungsimpuls der ersten Sekundärspannung V12 und ein positiver Spannungsimpuls der zweiten Sekundärspannung V22. Bei einer fallenden Flanke des Sendesignals Sin sind die Spannungsverhältnisse in den ersten und zweiten Primär- und Sekundärwicklungen vertauscht. Die erste Primärspannung V11 weist nach einer fallenden Flanke des Sendesignals Sin zu dem Zeitpunkt t2 zu einem späteren Zeitpunkt t3 eine steile steigende Flanke auf, während die zweite Primärspannung V22 eine steile fallende Flanke aufweist. Hieraus resultiert ein positiver Spannungsimpuls der ersten Sekundärspannung V12 zum Zeitpunkt t3 und ein negativer Impuls der zweiten Sekundärspannung V22 zum Zeitpunkt t3.

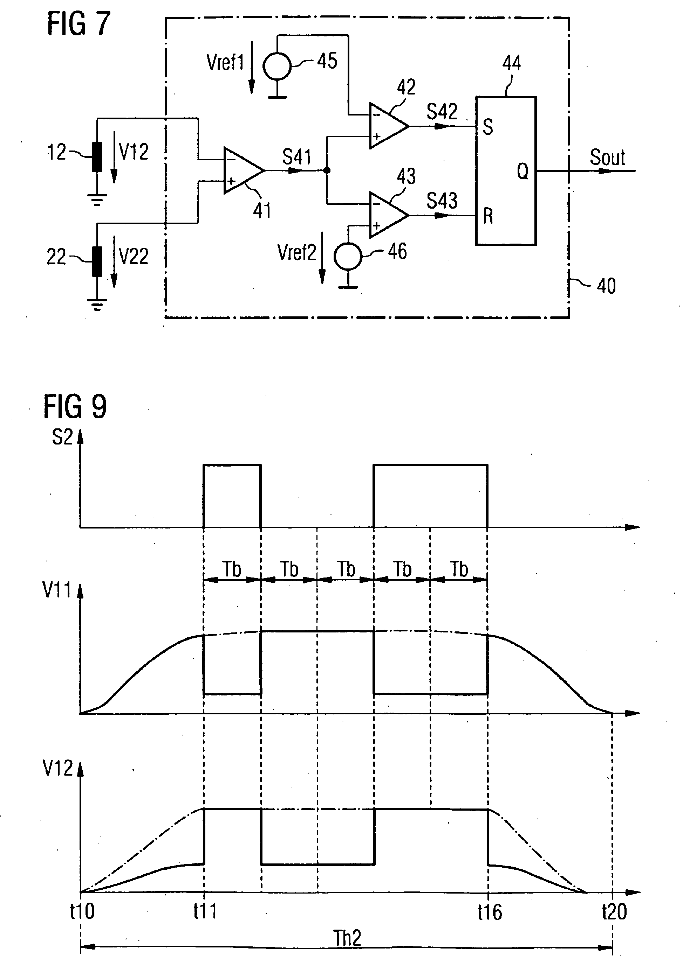

Ein schaltungstechnisches Realisierungsbeispiel zur Rekonstruktion des Sendesignals Sin aus den Sekundärspannungen V12, V22 ist in Figur 7 dargestellt. Die Empfängerschaltung 40 weist einen Differenzverstärker 41 auf, dessen invertierendem Eingang die erste Sekundärspannung V12 und dessen nicht-invertierendem Eingang die zweite Sekundärspannung V22 zugeführt ist. Am Ausgang dieses Differenzverstärkers 41 steht ein Differenzsignal S41 zur Verfügung, das der (verstärkten) Differenz zwischen der zweiten Sekundärspannung V22 und der ersten Sekundärspannung V12 entspricht. Der zeitliche Verlauf dieses Differenzsignals S41 ist für die in Figur 6 dargestellten zeitlichen Verläufe der Sekundärspannungen V12, V22 in Figur 8a dargestellt. Wie ersichtlich ist, weist das Differenzsignal S41 zum Zeitpunkt t1 einen aus dem negativen Spannungsimpuls der ersten Sekundärspannung V12 und dem positiven Spannungsimpuls der zweiten Sekundärspannung V22 resultierenden positiven Spannungsimpuls auf und zum Zeitpunkt t3 einen aus dem positiven Spannungsimpuls der ersten Sekundärspannung V12 und dem negativen Spannungsimpuls der zweiten Sekundärspannung V22 resultierenden negativen Spannungsimpuls auf. Dem Differenzverstärker 41 ist eine Vergleicheranordnung mit einem ersten und zweiten Komparator 42, 43 nachgeschaltet. Der erste Komparator 42 vergleicht das Differenzsignal S41 mit einer von einer ersten Referenzspannungsquelle 45 bereitgestellten ersten Schwellenspannung Vref1, und der zweite Komparator 43 vergleicht das Differenzsignal 41 mit einem von einer zweiten Referenzspannungsquelle 46 gelieferten zweiten Schwellenspannung Vref2. Die Pegel der Schwellenspannungen Vref1, Vref2 sind in Figur 8a ebenfalls eingezeichnet. Der erste Komparator 42 ist so mit dem Differenzverstärker 41 und der ersten Referenzspannungsquelle 45 verschaltet, dass am Ausgang dieses ersten Komparators in dem Beispiel ein High-Pegel anliegt, wenn das Differenzsignal S41 den ersten Schwellenwert Vref1 übersteigt. Der zweite Komparator 42 ist so mit der Referenzspannungsquelle 46 und dem Differenzverstärker 41 verschaltet, dass am Ausgang dieses Komparators 43 ein High-Pegel anliegt, wenn das Differenzsignal S41 unter den Pegel des zweiten Schwellenwertes Vref2 absinkt. Den beiden Komparatoren 42, 43 ist eine Speicherschaltung nachgeschaltet der die Ausgangssignale S42, S43 der beiden Komparatoren 42, 43 zugeführt sind. Die Speicherschaltung 44 ist in dem Beispiel als RS-Flipflop ausgebildet, deren Setz-Eingang das erste Komparatorsignal S42 zugeführt ist, und deren Rücksetz-Eingang das zweite Komparatorsignal S43 zugeführt ist. Am Ausgang dieses Flip-Flops 44 steht das Empfangssignal Sout zur Verfügung, das bei störungsfreier Übertragung zeitverzögert dem Eingangssignal Sin folgt. Das Flip-Flop 44 wird zum Zeitpunkt t1 bei einem positiven Impuls des Differenzsignals S41 gesetzt, wodurch das Empfangssignal Sout einen High-Pegel annimmt, und das Flip-Flop wird zum Zeitpunkt t3 bei einem negativen Impuls des Differenzsignals S41 zurückgesetzt, wodurch das Ausgangssignal Sout einen Low-Pegel annimmt.

Das erfindungsgemäße Gegentaktübertragungsverfahren ist besonders störresistent, da davon ausgegangen werden kann, dass sich auftretende Störsignale gleichermaßen auf beide Übertragungskanäle auswirken. Solche Gleichtakt-Störsignale werden empfängerseitig durch die Bildung der Differenz der beiden Sekundärspannungen V12, V22 auf einfache Weise ausgefiltert und haben dadurch keinen Einfluss auf die empfängerseitige Rückgewinnung des Sendesignals.

Das erfindungsgemäße Verfahren wurde bisher für die Übertragung eines zweiwertigen Sendesignals Sin erläutert. Zu übertragende Informationsereignisse sind hierbei beispielsweise steigende und fallende Flanken des Sendesignals Sin, wobei in Kenntnis der Zeitpunkte der steigenden und fallenden Flanken des Sendesignals Sin das Sendesignal sekundärseitig wiedergewonnen werden kann. Während der Hüllkurvendauer wird dabei ein Informationsbit übertragen, das entweder für eine steigende oder für eine fallende Flanke des Sendesignals Sin steht. Selbstverständlich kann das Verfahren auch so eingesetzt werden, dass zur Übertragung eines Bitstromes pro Informationsbit gegenläufige Impulse übertragen und sekundärseitig aus den übertragenen Impulsen die Impulsfolge zurückgewonnen wird. Für einen Bitwert "1" werden hierzu beispielsweise Primärspannungen erzeugt, wie sie in dem zuvor erläuterten Beispiel bei einer steigenden Flanke erzeugt werden, und für einen Bitwert "0" werden hierzu beispielsweise Primärspannungen erzeugt, wie sie in dem zuvor erläuterten Beispiel bei einer fallenden des Sendesignals Sin Flanke erzeugt werden.

Wie nachfolgend anhand von Figur 9 erläutert werden wird, ist das Verfahren jedoch nicht darauf beschränkt, innerhalb der Hüllkurvendauer Th nur ein Informationsbit zu übertragen.

Bezug nehmend auf Figur 9 besteht vielmehr auch die Möglichkeit, die Hüllkurve während der Hüllkurvendauer Th2 mit einer Impulssequenz S2 zu modulieren. Die Hüllkurve ist hierfür vorzugsweise so gewählt, dass sie jeweils nach einem Startzeitpunkt t10 innerhalb der Anstiegsdauer bis zu einem Zeitpunkt t11 auf einen Maximalwert ansteigt und für eine Zeitdauer ungleich Null auf diesem Maximalwert verbleibt, bis sie beginnend mit einem Zeitpunkt t16 innerhalb der Abfalldauer auf den Anfangswert absinkt, den sie zu einem Zeit t20 erreicht. Die Modulation der Hüllkurve mit der Impulssequenz S2 erfolgt dabei vorzugsweise während der Zeitdauer t11-t16 zu dem die Hüllkurve ihren Maximalwert besitzt. Diese Maximalwertdauer t11-t16 ist in eine Anzahl Bitdauern Tb, in dem Beispiel fünf Bitdauern, unterteilt, wobei die Modulation/Abbildung der Impulssequenz auf die Primärspannungen V11, V21 derart erfolgt, dass Pegelwechsel der Impulssequenz zu steilen Flanken der Primärspannungen V11, V21 führen. Ein Pegelwechsel der Impulssequenz von einem "0"-Pegel zu einem "1"-Pegel führt zu einer fallenden steilen Flanke der ersten Primärspannung V11 und einer steigenden steilen Flanke der zweiten Primärspannung V21, während ein Wechsel von einem "1"-Pegel zu einem "0"-Pegel zu einer steigenden steilen Flanke der ersten Primärspannung V11 und einer fallenden steilen Flanke der zweiten Primärspannung V21 führt.

Der Verlauf der Hüllkurve ist für die beiden Primärspannungen V11, V12 jeweils strichpunktiert dargestellt. Die Aufteilung der Hüllkurve auf die Primärspannung V11, V21 erfolgt in dem Beispiel derart, dass die Primärspannungen während der Hüllkurvendauer Th2 einen permanenten Spannungsanteil ungleich Null besitzen.

Bezugszeichenliste
- I11, I21: Primärströme
- IN: Eingang der Übertragungsstrecke
- OUT: Ausgang der Übertragungsstrecke
- S31, S32: Eingangssignale der Treiberschaltungen
- S35_1, S35_2, S35_3: Signalimpulse
- S36: Hüllkurvensignal
- S38: Gatterausgangssignal
- S41: Differenzsignal
- S42, S43: Komparatorsignale
- Sin: Sendesignal
- Sout: Empfangssignal
- Tb: Bitdauer
- Tf: Abfalldauer
- Th, Th2: Hüllkurvendauer
- Tr: Anstiegsdauer
- V11, V21: Primärspannung
- V12, V22: Sekundärspannungen
- Vref1, Vref2: Schwellenspannungen
- 10, 20: induktive Übertrager
- 30: Sendevorrichtung
- 11, 21: Primärwicklungen
- 12, 22: Sekundärwicklungen
- 35: Impulsgenerator
- 36: Impulsformer
- 37: Latch
- 38: Logik-Gatter, XOR-Gatter
- 40: Empfangsvorrichtung
- 41: Differenzverstärker
- 44: RS-Flipflop
- 31, 32: Treiberschaltung, Bipolartransistor
- 33, 34: Umschalter
- 42, 43: Komparatoren
- 45, 46: Referenzspannungsquellen

## Patentansprüche

1. Verfahren zur Datenübertragung über eine Übertragungsstrecke mit wenigstens zwei induktiven Übertragern (10, 20), die jeweils eine Primärwicklung (11, 21) mit einer Zeitkonstanten und eine Sekundärwicklung (21, 22) aufweisen, mit dem folgenden Merkmal:
- Ansteuern der Primärwicklungen (11, 21) zur Übertragung eines Informationsereignisses mittels Ansteuersignalen (V11, V21) derart, dass die Summe der Ansteuersignale (V11, V21) einer Hüllkurve mit einer Hüllkurvendauer (Th; Th2) folgt,
**dadurch gekennzeichnet dass**
- die Hüllkurve so gewählt ist, dass sie im zeitlichen Verlauf innerhalb einer Anstiegsdauer (Tr) von einem Anfangswert auf einem Maximalwert ansteigt und innerhalb einer Abfalldauer (Tf) von dem Maximalwert wieder auf den Anfangswert absinkt und die Anstiegsdauer (Tr) und die Abfalldauer (Tf) betragsmäßig länger sind als die Zeitkonstanten der Primärwicklungen (11, 21),
- wobei der zeitliche Verlauf der Ansteuersignale (V11, V21) von der zu übertragenden Information abhängig und so gewählt ist, dass wenigstens eine steile Flanke vorhanden ist, deren Flankendauer kürzer als die Zeitkonstanten der Primärwicklungen (11, 21) ist.

2. Verfahren nach Anspruch 1, bei dem die Ansteuersignale Spannungen (V11, V21) über den Primärwicklungen (11, 21) sind oder bei dem die Ansteuersignale Ströme (I11, I21) durch die Primärwicklungen (11, 21) sind.

3. Verfahren nach Anspruch 1 oder 2, bei dem die zeitlichen Verläufe der Ansteuersignale (V11, V21) so gewählt sind, dass eines der Ansteuersignale während der Hüllkurvendauer (Th) jeweils wenigstens annähernd Null ist.

4. Verfahren nach Anspruch 1 oder 2, bei dem die zeitlichen Verläufe der Ansteuersignale (V11, V21) so gewählt sind, dass sie während der Hüllkurvendauer einen Signalanteil ungleich Null aufweisen.

5. Verfahren nach einem der vorangehenden Ansprüche, bei dem die zeitlichen Verläufe der Ansteuersignale (V11, V21) so gewählt sind, dass eine steile Flanke unmittelbar oder kurze Zeit nach einem Zeitpunkt vorliegt (tl; t3), zu dem die Hüllkurve ihren Maximalwert erreicht.

6. Verfahren nach Anspruch 5, bei dem die Hüllkurve so gewählt ist, dass sie unmittelbar nach (tl; t3) der steilen Flanke der zeitlichen Verläufe der Ansteuersignale (V11, V21) wieder absinkt.

7. Verfahren nach einem der Ansprüche 1 bis 4, bei dem die Hüllkurve nach der Anstiegsdauer für eine vorgegebene Zeitdauer (t11-t16) auf dem Maximalwert verbleibt.

8. Verfahren nach einem der vorangehenden Ansprüche, bei dem die Signalverläufe der Ansteuersignale (V11, V21) mehr als eine steile Flanke aufweisen, deren zeitliche Lage von dem zu übertragenden Informationsereignis abhängig ist.

9. Verfahren nach einem der vorangehenden Ansprüche, bei dem die Hüllkurve den Verlauf einer Gauß-Kurve oder den Verlauf eines Abschnitts einer Sinus-Quadrat-Kurve besitzt.

10. Verfahren nach einem der vorangehenden Ansprüche, das folgende Verfahrensschritte zur empfängerseitigen Ermittlung des übertragenen Informationsereignisses umfasst:
- Erfassen von Empfangssignalen (V12, V22), die an den Sekundärwicklungen abgreifbar sind,
- Bilden eines Differenzsignals (S41) aus den Empfangssignalen (V12, V22),
- Vergleichen des Differenzsignals (S41) mit einem ersten und einem zweiten Schwellenwert (Vref1, Vref2).

11. Vorrichtung zur Datenübertragung; die folgende Merkmale aufweist:
- eine Übertragungsstrecke mit wenigstens zwei induktiven Übertragern (10, 20), die jeweils eine Primärwicklung (11, 21) mit einer Zeitkonstanten und eine Sekundärwicklung (21, 22) aufweisen,
- eine an die Primärwicklungen angeschlossene Sendevorrichtung (30) mit einem Eingang (IN) zur Zuführung eines Sendesignals (Sin), die Ansteuersignale für die Primärwicklungen derart bereitstellt, dass die Summe der Ansteuersignale einer Hüllkurve mit einer Hüllkurvendauer folgt,
**dadurch gekennzeichnet dass**
- die Hüllkurve so gewählt ist, dass sie im zeitlichen Verlauf innerhalb einer Anstiegsdauer (Tr) von einem Anfangswert auf einem Maximalwert ansteigt und innerhalb einer Abfalldauer (Tf) wieder auf den Anfangswert absinkt und dass deren Anstiegsdauer (Tr) und Abfalldauer (Tf) betragsmäßig länger als die Zeitkonstanten der Primärwicklungen (11, 21) sind,
- wobei der zeitliche Verlauf der Ansteuersignale von zu übertragenden Information abhängig und so gewählt ist, dass wenigstens eine steile Flanke vorhanden ist, deren Flankendauer betragsmäßig kürzer als die Zeitkonstanten der Primärwicklungen (11, 21) ist.

12. Vorrichtung nach Anspruch 11, die folgende weitere Merkmale aufweist:
- eine an eine erste der Primärwicklungen angeschlossene erste Treiberstufe (31) und eine an eine zweite der Primärwicklungen angeschlossene zweite Treiberstufe (32),
- einen Signalgenerator (35, 36), der abhängig von dem Eingangssignal ein die Hüllkurve vorgebendes Hüllkurvensignal (S38) erzeugt,
- eine Verteilerschaltung (32, 33, 38), die dazu ausgebildet ist, das Hüllkurvensignal abhängig von dem Eingangssignal (Sin) in wenigstens zwei Teilsignale aufzuspalten, von denen jeweils eines einer der Treiberschaltungen (31, 32) zur Erzeugung der Ansteuersignale (V11, V12; I11, I12) zugeführt sind.

13. Vorrichtung nach Anspruch 12, bei der der Signalgenerator (35, 36) einen Impulsgenerator (35) und einen dem Impulsgenerator nachgeschalteten Impulsformer (36) aufweist.

14. Vorrichtung nach Anspruch 12 oder 13, bei der die Verteilerschaltung (33, 34, 38) derart ausgebildet ist, dass jeweils eines der Teilsignale Null ist.

15. Vorrichtung nach Anspruch 12 oder 13, bei der die Treiberschaltungen (31, 32) und die Verteilerschaltung (33, 34, 38) so ausgebildet sind, dass während einer Zeitdauer, während der das Hüllkurvensignal ungleich Null ist, beide Ansteuersignale einen Signalanteil ungleich Null besitzen.

16. Vorrichtung nach einem der Ansprüche 11 bis 15, die eine Empfängerschaltung (40) mit folgenden Merkmalen aufweist:
- einen Differenzverstärker (41) mit einem ersten Eingang der an eine der Sekundärwicklung (12, 22) angeschlossen und einem zweiten Eingang, der an die andere der Sekundärwicklungen (12, 22) angeschlossen ist, der ein Differenzsignal (S41) erzeugt,
- eine dem Differenzverstärker (41) nachgeschaltete Vergleicheranordnung (42, 43), die das Differenzsignal (S41) mit einem ersten und einem zweiten Schwellenwert (Vref1, Vref2) vergleicht.

## Claims

1. Method for data transmission via a transmission path having at least two inductive transformers (10, 20), which each have a primary winding (11, 21) with a time constant and have a secondary winding (21, 22), having the following feature:
- the primary windings (11, 21) are driven to transmit an information event by means of drive signals (V11, V21) in such a way that the sum of the drive signals (V11, V21) follows an envelope curve with an envelope curve duration (Th; Th2),
- **characterized in that** the envelope curve is chosen such that its time profile rises within a rise period (Tr) from an initial value to a maximum value and falls within a fall period (Tf) from the maximum value back to the initial value, and the magnitudes of the rise period (Tr) and of the fall period (Tf) are longer than the time constants of the primary windings (11, 21),
- with the time profile of the drive signals (V11, V21) being dependent on the information to be transmitted and being chosen such that there is at least one steep flank, whose flank duration is shorter than the time constants of the primary windings (11, 21).

2. Method according to Claim 1, in which the drive signals are voltages (V11, V21) across the primary windings (11, 21), or in which the drive signals are currents (I11, I21) through the primary windings (11, 21).

3. Method according to Claim 1 or 2, in which the time profiles of the drive signals (V11, V21) are chosen such that one of the drive signals is in each case at least approximately zero throughout the envelope curve duration (Th).

4. Method according to Claim 1 or 2, in which the time profiles of the drive signals (V11, V21) are chosen such that they have a signal component not equal to zero throughout the envelope curve duration.

5. Method according to one of the preceding claims, in which the time profiles of the drive signals (V11, V21) are chosen such that there is a steep flank immediately or a short time after a time (t1; t3) at which the envelope curve reaches its maximum value.

6. Method according to Claim 5, in which the envelope curve is chosen such that it falls again immediately after (t1; t3) the steep flank of the time profiles of the drive signals (V11, V21).

7. Method according to one of Claims 1 to 4, in which the envelope curve remains at the maximum value for a predetermined time period (t11-t16) after the rise period.

8. Method according to one of the preceding claims, in which the signal profiles of the drive signals (V11, V21) have more than one steep flank, whose timing is dependent on the information event to be transmitted.

9. Method according to one of the preceding claims, in which the envelope curve has the profile of a Gaussian curve or the profile of a section of a sine-squared curve.

10. Method according to one of the preceding claims, which comprises the following method steps for receiver-end determination of the transmitted information event:
- received signals (V12, V22) which can be tapped off from the secondary windings are recorded,
- a difference signal (S41) is formed from the received signals (V12, V22),
- the difference signal (S41) is compared with a first and a second threshold value (Vref1, Vref2).

11. Apparatus for data transmission, which has the following features:
- a transmission path with at least two inductive transformers (10, 20), which each have a primary winding (11, 21) with a time constant, and have a secondary winding (21, 22),
- a transmission apparatus (30), which is connected to the primary windings, with an input (IN) for supplying a transmission signal (Sin) which produces drive signals for the primary windings in such a way that the sum of the drive signals follows an envelope curve with an envelope curve duration,
- **characterized in that** the envelope curve is chosen such that its time profile rises within a rise period (Tr) from an initial value to a maximum value and falls within a fall period (Tf) back to the initial value, and that the magnitudes of the rise period (Tr) and of the fall period (Tf) are longer than the time constants of the primary windings (11, 21),
- with the time profile of the drive signals being dependent on the information to be transmitted and being chosen such that there is at least one steep flank, whose flank duration is shorter than the time constants of the primary windings (11, 21).

12. Apparatus according to Claim 11, which has the following further features:
- a first driver stage (31), which is connected to a first of the primary windings, and a second driver stage (32), which is connected to a second of the primary windings,
- a signal generator (35, 36), which produces an envelope curve signal (S38), which predetermines the envelope curve, as a function of the input signal,
- a distributor circuit (32, 33, 38), which is designed to split the envelope curve signal as a function of the input signal (Sin) into at least two signal elements, one of which is in each case supplied to one of the driver circuits (31, 32) in order to produce the drive signals (V11, V12; I11, I12).

13. Apparatus according to Claim 12, in which the signal generator (35, 36) has a pulse generator (35) and a pulse shaper (36), which is connected downstream from the pulse generator.

14. Apparatus according to Claim 12 or 13, in which the distributor circuit (33, 34, 38) is designed in such a way that in each case one of the signal elements is zero.

15. Apparatus according to Claim 12 or 13, in which the driver circuits (31, 32) and the distributor circuit (33, 34, 38) are designed such that both drive signals have a signal component which is not equal to zero throughout a time period during which the envelope curve signal is not equal to zero.

16. Apparatus according to one of Claims 11 to 15, which has a receiver circuit (40) with the following features:
- a differential amplifier (41) with a first input which is connected to one of the secondary windings (12, 22) and with a second input which is connected to the other of the secondary windings (12, 22), and which produces a difference signal (S41),
- a comparator arrangement (42, 43), which is connected downstream from the differential amplifier (41) and compares the difference signal (S41) with a first and a second threshold value (Vref1, Vref2).

## Revendications

1. Procédé de transmission de données par une section de transmission ayant au moins deux transformateurs (10, 20) inductifs, qui ont respectivement un enroulement (11, 21) primaire ayant une constante de temps et un enroulement (21, 22) secondaire, comprenant les caractéristiques suivantes :
- on commande les enroulements (11, 21) primaires pour la transmission d'un évènement informatif au moyen de signaux (V11, V21) de commande, de façon à ce que la somme des signaux (V11, V21) de commande suive une courbe enveloppe ayant une durée (Th ; Th2) de courbe enveloppe,
**caractérisé en ce que**
- on choisit la courbe enveloppe de manière à ce qu'elle croisse au cours du temps pendant une durée (Tr) de croissance d'une valeur initiale à une valeur maximum et redécroisse pendant une durée (Tf) de décroissance de la valeur maximum à la valeur initiale et la durée (Tr) de croissance et la durée (Tf) de décroissance sont plus grandes en valeur absolue que les constantes de temps des enroulements (11, 21) primaires,
- dans lequel la variation dans le temps des signaux (V11, V21) de commande dépend de l'information à transmettre et est choisie de façon à ce qu'il y ait au moins un front abrupt dont la durée est plus courte que les constantes de temps des enroulements (11, 21) primaires.

2. Procédé suivant la revendication 1, dans lequel les signaux de commande sont des tensions (V11, V21) aux bornes des enroulements (11, 21) primaires ou dans lequel les signaux de commande sont des courants (I11, I21) p assant dans les enroulements (11, 21) primaires.

3. Procédé suivant la revendication 1 ou 2, dans lequel on choisit les variations dans le temps des signaux (V11, V21) de commande de façon à ce que l'un des signaux de commande soit respectivement au moins à peu près égal à zéro pendant la durée (Th) de la courbe enveloppe.

4. Procédé suivant la revendication 1 ou 2, dans lequel on choisit les variations dans le temps des signaux (V11, V21) de commande de façon à ce qu'une partie du signal ne soit pas égale à zéro pendant la durée de la courbe enveloppe.

5. Procédé suivant l'une des revendications précédentes, dans lequel on choisit les variations dans le temps des signaux (V11, V21) de commande de manière à ce qu'il y ait un front abrupt immédiatement ou peu après un instant (t1 ; t3) auquel la courbe enveloppe atteint sa valeur maximum.

6. Procédé suivant la revendication 5, dans lequel on choisit la courbe enveloppe de façon qu'immédiatement après (t1 ; t3) du front abrupt des variations dans le temps, les signaux (V11, V21) de commande redécroissent.

7. Procédé suivant l'une des revendications 1 à 4, dans lequel la courbe enveloppe reste, après la durée de croissance, pendant un laps de temps (t11 à t16) prescrit, à la valeur maximum.

8. Procédé suivant l'une des revendications précédentes, dans lequel les variations des signaux (V11, V21) de commande ont plus qu'un front abrupt dont la position dans le temps dépend de l'évènement informatif à transmettre.

9. Procédé suivant l'une des revendications précédentes, dans lequel la courbe enveloppe a le tracé d'une courbe de Gauβ ou le tracé d'un tronçon d'une courbe en sinus carré.

10. Procédé suivant l'une des revendications précédentes, qui comprend des stades de procédé suivants pour la détermination du côté récepteur de l'évènement informatif transmis :
- détection de signaux (V12, V22) de réception, qui peuvent être prélevés sur les enroulements secondaires,
- formation d'un signal (S41) de différence à partir des signaux (V12, V22) de réception,
- comparaison du signal (S41) de différence à une première et à une deuxième valeur (Vref1, Vref2) de seuil.

11. Dispositif de transmission de données, qui a les caractéristiques suivantes :
- une section de transmission ayant au moins deux transformateurs (10, 20) inductifs qui ont, respectivement, un enroulement (11, 21) primaire ayant une constante de temps et un enroulement (21, 22) secondaire,
- un dispositif (30) d'émission, raccordé aux enroulements primaires et ayant une entrée (IN) pour l'entrée d'un signal (Sin) d'émission, qui procure les signaux de commande pour les enroulements primaires, de façon à ce que la somme des signaux de commande suive une courbe enveloppe ayant une durée de courbe enveloppe,
**caractérisé en ce que**
- l'on choisit la courbe enveloppe de manière à ce qu'elle croisse au cours du temps pendant une durée (Tr) de croissance d'une valeur initiale à une valeur maximum et redécroisse pendant une durée (Tf) de décroissance de la valeur maximum à la valeur initiale et la durée (Tr) de croissance et la durée (Tf) de décroissance sont plus grandes en valeur absolue que les constantes de temps des enroulements (11, 21) primaires,
- dans lequel la variation dans le temps des signaux (V11, V21) de commande dépend de l'information à transmettre et est choisie de façon à ce qu'il y ait au moins un front abrupt dont la durée est plus courte que les constantes de temps des enroulements (11, 21) primaires.

12. Dispositif suivant la revendication 11, qui a les autres caractéristiques suivantes :
- un premier étage (31) d'attaque, raccordé à un premier des enroulements primaires et un deuxième étage (32) d'attaque, raccordé à un deuxième des enroulements primaires,
- un générateur (35, 36) de signal qui, en fonction du signal d'entrée, produit un signal (S38) de courbe enveloppe prescrivant la courbe enveloppe,
- un circuit (32, 33, 38) de répartiteur, qui est conçu pour séparer la courbe de signal enveloppe en fonction du signal (Sin) d'entrée en au moins deux sous-signaux dont l'un, respectivement, est envoyé à l'un des circuits (31, 32) d'attaque pour produire les signaux (V11, V12 ; I11, I12) de commande.

13. Dispositif suivant la revendication 12, dans lequel le générateur (35, 36) de signal comporte un générateur (35) d'impulsions et un formeur (36) d'impulsions en aval du générateur d'impulsions.

14. Dispositif suivant la revendication 12 ou 13, dans lequel le circuit (33, 34, 38) répartiteur est tel que, respectivement, l'un des sous-signaux est égal à zéro.

15. Dispositif suivant la revendication 12 ou 13, dans lequel les circuits (31, 32) d'attaque et le circuit (33, 34, 38) répartiteur sont tels que, pendant un laps de temps pendant lequel le signal de courbe enveloppe est différent de zéro, les deux signaux de commande ont une partie de signal qui n'est pas égale à zéro.

16. Dispositif suivant l'une des revendications 11 à 15, qui a un circuit (40) de récepteur et ayant les caractéristiques suivantes :
- un amplificateur (41) différentiel ayant une première entrée qui est raccordée à l'un des enroulements (12, 22) secondaires et une deuxième entrée qui est raccordée à l'autre des enroulements (12, 22) secondaires et qui produit un signal (S41) de différence,
- un dispositif (42, 43) de comparateur qui est monté en aval de l'amplificateur (41) différentiel et qui compare le signal (S41) de différence à une première et à une deuxième valeur (Vref1, Vref2) de seuil.
